# DEMANDE DE BREVET EUROPEEN

(11) **EP 2 226 749 A1**
(43) Date de publication de la demande: **08.09.2010**
(21) Numéro de dépôt: 10155829.4
(22) Date de dépôt: 08.03.2010
(51) Int. Cl.: G06Q 10/00, G07C 5/00

(54) **Procédé et système de gestion d'une flotte de véhicules**

(30) Priorité: 06.03.2009 FR 0951410
(71) Demandeur: Vu Log, 06600 Antibes (FR)
(72) Inventeur: Gallais, Georges Bernard Marie Paul Antoine, 06600 Antibes (FR); Emsellem, David Serge Ange André, 06600 Antibes (FR)
(74) Mandataire: de Zeeuw, Johan Diederick

(57) **Abrégé**

Procédé de gestion d'un ensemble de véhicules associé à un opérateur, lesdits véhicules étant attribuables à un ou plusieurs exploitants, chaque véhicule étant identifié au moyen d'un identifiant numérique au sein d'un système électronique de gestion, chaque identifiant numérique étant pourvu d'au moins un critère d'association afin de définir les propriétés de circulation initiales du véhicule ledit procédé étant **caractérisé en ce qu**'il comprend les étapes suivantes, la réception d'une demande de modification d'au moins un des critères d'association d'un véhicule; la détermination de la nature du critère d'association à modifier; la modification automatique du critère de l'identifiant numérique en fonction de la détermination de la nature du critère afin de générer des propriétés de circulation modifiées du véhicule.

## Description

### Domaine de l'invention

La présente invention concerne la gestion d'une flotte de véhicules et plus précisément la gestion de la répartition de ces véhicules entre différents exploitants pour une mise à disposition auprès d'utilisateurs.

### Etat de l'art

De nombreuses collectivités et villes sont amenées à proposer à leurs citoyens des services de mobilité nommés services de véhicules individuels publics en libre-service. Les utilisateurs des véhicules peuvent ainsi circuler librement dans un périmètre strictement urbain tel que la ville et sa périphérie, comme décrit dans la demande de brevet français 0704117.

Des opérateurs gèrent ces services de mobilité. Les opérateurs agissent, par exemple, en délégation de service public ou par un simple contrat de location d'une flotte de véhicules. Plusieurs types de services sont donc amenés à coexister en fonction des critères de chaque type de service. Ainsi, les critères peuvent être géographiques, c'est à dire relatifs à un périmètre donné de circulation des véhicules. Les critères peuvent être également temporels, c'est-à-dire relatifs à une période de temps, telle qu'une sélection de certains jours de la semaine. Les critères peuvent aussi se référer à une combinaison des critères géographiques et temporels. Un service de mobilité donné comprend un système de location associé à une flotte spécifique de véhicules sur une zone géographique particulière de la ville. Ainsi, un opérateur donné est affecté à une zone géographique distincte d'une autre zone géographique associée à un autre opérateur. Ainsi, lorsqu'une même ville utilise différents services de location de véhicules urbains, les différents opérateurs sont amenés à coexister au sein de cette même ville.

Il est possible de réaliser des mesures statistiques liées à l'utilisation de véhicules sur une zone géographique spécifique. Ainsi, les mesures statistiques permettent de faire ressortir le nombre de demandes des utilisateurs par rapport au nombre de véhicules effectivement utilisés. Il apparaît alors que sur une période d'une semaine, par exemple, une première zone géographique donnée peut être en déficit de véhicules c'est-à-dire que le nombre de demandes des utilisateurs est supérieur au nombre de véhicules disponibles à la location. De la même manière, sur une période d'une semaine, une seconde zone mitoyenne à la première peut être en surnombre de véhicules c'est-à-dire que le nombre de demandes des utilisateurs est inférieur au nombre de véhicules disponibles à la location. Ainsi, les mesures statistiques révèlent que pour une même période donnée d'une semaine, une première zone est en déficit de véhicules alors qu'une deuxième zone est en surnombre de véhicules. Donc, pour chacune de ces zones, le nombre de véhicules de la flotte n'est pas adapté à la zone géographique. De manière plus précise, les mesures statistiques permettent de faire ressortir les jours ou parties de jour de la semaine pour lesquels le nombre de véhicules à disposition n'est des utilisateurs n'est pas adapté à la demande des utilisateurs.

A l'heure actuelle, il n'existe pas de solution pour améliorer la répartition des véhicules des différentes flottes sur certaines zones géographiques et à certaines périodes. Les services de mobilité actuels s'engagent contractuellement à respecter une zone de circulation déterminée. Par conséquent, cette affectation figée par contrat est source de déséquilibre dans la répartition des différentes flottes de véhicules sur différentes zones géographiques.

Dans le cas de véhicules à faible autonomie (électrique, hybride rechargeable, air comprimé,..), ce déséquilibre est aggravé par l'existence de lieux de recharge libres et à proximité.

### Résumé de l'invention

Un premier but de la présente invention est de fournir un procédé et un système de gestion de flottes de véhicule afin de résoudre tous ou certains des désavantages indiqués précédemment et notamment de permettre la mutualisation ou la mise en commun dynamique des véhicules appartenant à différents systèmes de gestion de flottes de véhicules.

Un objet de la présente invention concerne un procédé de gestion d'un ensemble de véhicules associé à un ou plusieurs opérateurs, lesdits véhicules étant attribuables à un ou plusieurs exploitants, chaque véhicule étant identifié au moyen d'un identifiant numérique au sein d'un système électronique de gestion, chaque identifiant numérique étant pourvu d'au moins un critère d'association afin de définir les propriétés de circulation initiales du véhicule ledit procédé comprenant la réception d'une demande de modification d'au moins un des critères d'association d'un véhicule ; la détermination de la nature du critère d'association à modifier ; la modification automatique du critère de l'identifiant numérique en fonction de la détermination de la nature du critère afin de générer des propriétés de circulation modifiées du véhicule.

Ainsi, le procédé permet de modifier automatiquement l'affectation d'un ensemble de véhicule au moyen d'un ou plusieurs critères d'association.

Selon un mode de réalisation préféré, le procédé comprend une étape de modification automatique du critère de l'identifiant afin de d'obtenir les propriétés de circulation initiales du véhicule. Ainsi, le procédé permet un changement d'affectation automatique de l'affectation d'un ou plusieurs véhicules.

Selon un autre mode de réalisation préféré, le procédé comprend une étape de détermination de la nature du critère d'association à modifier comprend l'obtention d'un critère géographique. Ainsi, le procédé permet de déterminer la zone géographique associée au changement d'affectation.

Selon un autre mode de réalisation préféré, le procédé comprend l'étape de détermination de la nature du critère d'association à modifier comprend l'obtention d'un critère temporel. Ainsi, le procédé permet d'obtenir la période de temps qui correspond à la durée du changement d'affectation d'un ou plusieurs véhicules.

Selon un autre mode de réalisation préféré, l'étape de détermination de la nature du critère d'association à modifier comprend l'obtention d'un critère d'opération de recharge énergétique.

Selon un autre mode de réalisation préféré, l'étape de détermination de la nature du critère d'association à modifier comprend l'obtention d'un critère énergétique associant au véhicule les lieux de rechargement libre et à proximité de la zone.

Selon un mode de réalisation préféré, le procédé comprend la modification du critère géographique du lieu de recharge.

Selon un mode de réalisation préféré, les véhicules sont des véhicules à faible autonomie.

Un second objet de la présente invention concerne un système de gestion d'une flotte de véhicules associée à un premier opérateur sur une première zone de circulation, chaque véhicule étant identifié au moyen d'un identifiant numérique au sein d'un système électronique de gestion, chaque identifiant numérique étant associé à un critère géographique afin de déterminer la première zone de circulation de chaque véhicule associé à l'identifiant numérique et à un critère temporel afin de déterminer la première période de temps associée à l'identifiant numérique ledit système comprenant un module de réception pour recevoir une demande de modification d'au moins un des critères d'association d'un véhicule associé au premier opérateur et à la première zone de circulation ; un module d'analyse pour déterminer la nature du critère d'association à modifier ; un module de modification pour modifier automatiquement le critère de l'identifiant numérique en fonction de la détermination de la nature du critère.

### Brève description des dessins

Les buts, objets et caractéristiques de l'invention apparaîtront plus clairement à la lecture de la description qui suit faite en référence aux dessins dans lesquels :
- la figure 1 décrit le schéma général du système de gestion selon l'invention, à titre d'exemple de réalisation ;
- la figure 2 décrit les principales du procédé selon l'invention, à titre d'exemple de réalisation.

### Description détaillée d'un mode de réalisation

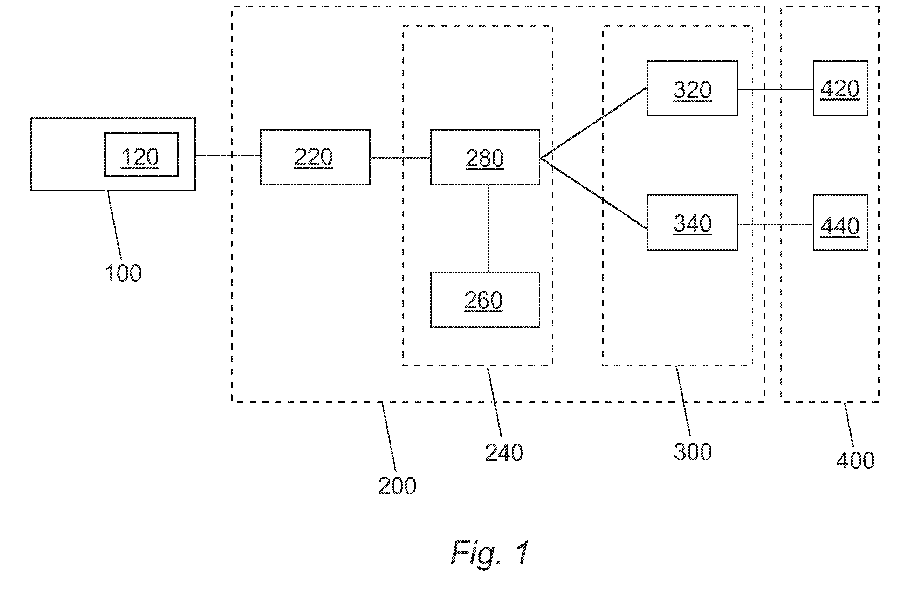

La figure 1 montre un système de gestion associé à un opérateur de service. L'opérateur de service peut être une municipalité telle que la ville de Paris. L'opérateur de service est en charge de la gestion de la circulation de véhicules 100. Les véhicules 100 comprennent des moyens de locomotion munis d'au moins deux roues. Ces véhicules 100 sont regroupés en flottes de véhicules 101 relatives à au moins un exploitant. Chaque exploitant est associé à une ou plusieurs flottes de véhicules 101. Les véhicules 100 peuvent être par exemple des véhicules électriques. Le système de gestion permet une mise à disposition de ces véhicules 100 auprès d'utilisateurs. Ces utilisateurs sont, par exemple, des personnes abonnées au système de gestion de l'exploitant concerné.

Le système de gestion gère la circulation des différentes flottes de véhicules au sein de différentes zones de circulation. Une zone de circulation est en général limitée au quartier d'une ville ou à l'environnement proche d'une structure privée telle qu'un hôtel, par exemple.

Le système de gestion gère l'ensemble des flottes de véhicules 100 se déplaçant au sein d'une même zone de circulation ou bien d'une zone de circulation à une autre.

Ainsi, le système de gestion permet de gérer la circulation d'une première flotte de véhicules 101 au sein d'une première zone de circulation associée à un premier exploitant en tenant compte de la gestion de la circulation d'une deuxième flotte de véhicules associée à un deuxième opérateur au sein de la première zone de circulation du premier exploitant.

Le système de gestion assure également la gestion de la circulation de la première flotte de véhicules 101 en tenant compte de la gestion de la circulation d'une troisième flotte de véhicules associée à un troisième exploitant concernant un deuxième zone de circulation.

Chaque véhicule 100 comprend un module électronique 120 localisé au sein du véhicule 100. Ce module électronique 120 identifie le véhicule 100 concerné grâce à un identifiant physique qui identifie de manière unique le véhicule 100. Cet identifiant physique est par exemple le numéro d'identification du véhicule (V.I.N.) délivré par le constructeur automobile. (le VIN fournit le mode de propulsion, donc la dépendance énergétique).

Le module électronique 120 peut communiquer avec le système de gestion de l'opérateur de service au moyen d'un système électronique de gestion 200. Ce système électronique de gestion 200 gère une ou plusieurs flottes de véhicules 101. Comme indiqué sur la figure 1, le système 200 comprend un serveur de répartition 220, un serveur de virtualisation 240 et un ensemble 300 de bases de données.

Le serveur de répartition ou module de réception 220 peut établir une liaison entre le véhicule 100 et un serveur de virtualisation 240. Plus précisément, le serveur de répartition 220 permet de créer une communication entre le module électronique 120 et le serveur de virtualisation 240. Ainsi le serveur de répartition 220 occupe un rôle d'interface pour toute communication en provenance d'un module électronique 120 d'un véhicule et destinée au serveur de virtualisation 240. Le serveur de répartition 220 reçoit les différentes requêtes en provenance du module électronique 120.

Le serveur de virtualisation ou module d'analyse 240 concerne l'ensemble des zones de circulation de toutes les flottes de véhicules. Le serveur de virtualisation 240 héberge une base de données 260, un module de recherche 280 et un ensemble 300 de différentes bases de données 320, 340. La base de données 260 répertorie les informations concernant les caractéristiques matérielles du véhicule 100 ainsi que les données liées à l'utilisation du véhicule. Les caractéristiques matérielles comprennent l'indication du numéro d'identification du véhicule (V.I.N.) qui identifie de manière unique le véhicule, des données mécaniques propres au véhicule telles que le niveau de batterie électrique, les problèmes mécaniques détectés sur le véhicule, l'indication sur la nécessité de réaliser des actions de maintenance sur le véhicule 100. Les données relatives à l'utilisation comprennent des données réelles et des données statistiques.

Les données réelles concernent, par exemple, le délai de disponibilité actuel du véhicule 100 pour un futur utilisateur potentiel, l'état de fonctionnement de la connexion entre le véhicule 100 et le serveur de virtualisation 240.

Les données statistiques comprennent des calculs statistiques et des extrapolations. Ces données statistiques sont calculées en temps réel par le serveur de virtualisation 240 à partir des informations envoyées en temps réel par les différents véhicules 100 à un serveur d'exploitation 420, 440 que nous décrirons ci-après. Ces informations statistiques comprennent des tableaux de bord. Ces tableaux de bord permettent d'établir des statistiques telles que la répartition de l'utilisation des véhicules 100 par zone de circulation et par semaine, l'extrapolation des futures utilisations quotidiennes, hebdomadaires ou mensuelles, la répartition des durées d'utilisation, le nombre de trajets réalisés par mois, la répartition des distances, la cartographie des utilisations, etc.

Grâce aux données réelles et aux données statistiques, la base de données 260 permet d'établir le bilan des utilisations passées, présentes et futures dans une zone de circulation ou dans un groupe de zones de circulation. Ainsi la base 260 fournit en temps réel des indicateurs pour chaque zone de circulation. Ces indicateurs concernent l'état de disponibilité d'une zone de circulation ou encore le délai d'attente associé à une demande d'utilisation potentielle d'un véhicule 100. A cet effet, les indicateurs tiennent compte du nombre d'habitants et du nombre de personnes travaillant à l'intérieur de cette zone de circulation dans la mesure où ces personnes peuvent à tout moment requérir un véhicule. Les indicateurs considèrent également les mouvements des véhicules 100 vers l'intérieur ou l'extérieur d'une zone de circulation donnée. Les indicateurs garantissent ainsi un seuil maximal d'attente d'environ trente minutes pour un futur utilisateur potentiel en attente d'un véhicule disponible. Ce seuil signifie que le système de gestion prévoit une attente maximale de trente minutes pour tout utilisateur souhaitant obtenir un véhicule dans une zone donnée.

Le calcul de ces indicateurs peut être réalisé toutes les minutes par exemple. Le rôle des indicateurs est donc d'indiquer un état de disponibilité global pour une zone de circulation donnée. Ainsi, l'indicateur peut indiquer un état d'indisponibilité, c'est-à-dire une mise à disponibilité d'un véhicule 100 au-delà du seuil défini tel que trente minutes par exemple. L'état d'indisponibilité peut être prévisible ou imprévisible.

L'état d'indisponibilité est non prévisible lorsque l'indicateur calculé en temps réel laisse apparaître un dépassement du seuil d'attente pour une zone de circulation donnée. Dans cette situation, une analyse en temps réel permet d'estimer si les précédentes statistiques relatives à cette zone de circulation laissent présumer une diminution du temps d'attente dans les trente prochaines minutes par exemple. Les précédentes statistiques peuvent par exemple indiquer que certains véhicules 100 sont supposés retourner à l'intérieur de la zone de circulation concernée dans ces trente prochaines minutes. Ces trente minutes supplémentaires par rapport au seuil initial de trente minutes constituent une marge de manoeuvre. En effet, cette marge de manoeuvre permet de vérifier s'il existe une solution pour remédier au manque de disponibilité de véhicule dans la zone de circulation concernée. Si aucune solution n'existe, alors la zone de circulation est en déficit de véhicule 100. Ce déficit implique alors qu'un véhicule 100 d'une autre zone de circulation doit être affecté à la zone de circulation déficitaire afin de conserver un délai d'attente en-dessous du seuil de trente minutes pour l'utilisateur. Cette demande de changement d'affectation nécessite alors la réalisation du processus de mutualisation entre deux zones de circulation afin d'optimiser la correspondance entre l'offre et la demande de véhicules 100 sur une zone donnée.

L'état d'indisponibilité peut également être prévisible. En effet, selon la localisation des zones de circulation, certaines zones de circulation sont identifiées comme étant en déficit de véhicules 100 selon certains jours de la semaine par exemple. Ainsi, les périodes de déficit de véhicules 100 peuvent être programmées à l'avance. Le changement d'affectation peut donc être préprogrammé afin de réaliser un processus de mutualisation entre deux ensembles de zones de circulation.

Le serveur de virtualisation 240 comprend également un module de recherche 280. Ce module de recherche 280 permet d'effectuer des recherches dans des bases de données concernant les véhicules 100 physiques. Le module de recherche 280 est basé sur une recherche à partir de l'identifiant physique du véhicule 100. Le module de recherche 280 permet de rechercher le nom logique ou identifiant logique associé à l'identifiant physique. Cet identifiant logique constitue l'appellation virtuelle du véhicule physique 100 au sein du système global de gestion des flottes de véhicules 100. L'identifiant logique comprend au moins deux critères d'association afin de déterminer les propriétés de circulation du véhicule concerné. Un critère d'association peut être de nature géographique afin de définir la zone de circulation associée au véhicule concerné. Un critère d'association peut également être de nature temporelle afin de définir la période de temps associée à la circulation du véhicule dans la zone de circulation associée au véhicule. Lorsqu'un véhicule physique 100 n'est pas en circulation ou n'est pas encore affecté à une zone de circulation particulière, le véhicule physique n'est pas associé à un identifiant logique. Ainsi, cette situation se produit lorsque le véhicule est un véhicule neuf non encore attribué à un exploitant, un véhicule déjà en possession de l'opérateur de service mais non attribué à un exploitant ou un véhicule en panne qui doit être retiré de toutes les flottes afin d'être réparé.

Le serveur de virtualisation 240 comprend également un module de modification automatique 290. Le module de modification automatique 290 permet de modifier au moins un critère d'association concernant un véhicule spécifique. La modification du critère d'association peut intervenir de manière prévisible c'est-à-dire lorsque le processus de mutualisation est réalisé de manière prévisible. La modification du critère d'association peut également intervenir de manière imprévisible c'est-à-dire lorsque la mutualisation est réalisée de manière imprévisible. Dans les deux situations, le module de modification automatique 290 effectue la modification d'un ou de plusieurs critères d'association sans nécessiter une intervention humaine sur le boîtier électronique 120 du véhicule 100 concerné.

Le serveur de virtualisation 240 comprend également un ensemble de bases de données 300. Cet ensemble 300 comprend différentes bases de données 320 et 340. Chacune de ces bases de données 320, 340 est associée à un exploitant spécifique au sein d'un ensemble 400 de serveurs d'exploitation. Chaque exploitant peut accéder au moyen de son propre serveur d'exploitation respectivement 420, 440 à sa propre base de données respectivement 320, 340 localisée au sein du serveur de virtualisation 240. Ainsi, les informations permettent de suivre régulièrement le déplacement des véhicules 100 dans leurs zones de circulation respectives. Une base de données d'un exploitant 320, 340 comprend les différentes informations associées à l'identifiant logique de chaque véhicule physique 100. Ces informations se réfèrent aux évènements liés aux différents déplacements du véhicule sur la zone de circulation associée à l'exploitant considéré. Pour un identifiant logique donné, un exploitant donné ne peut accéder à l'historique des informations relatives à cet identifiant logique au sein de la base de données 320, 340 d'un autre exploitant. Ainsi, il existe une confidentialité entre les différents exploitants vis-à-vis des informations reçues par les véhicules physiques 100 en circulation au sein des différentes zones de circulation. Le module de recherche 280 réalise les recherches des identifiants logiques au sein de l'ensemble 300 de bases de données des exploitants 320, 340.

Ainsi le serveur de virtualisation 240 analyse la nature du ou des critères d'association relatifs aux propriétés de circulation du véhicule 100 concerné. Après analyse, le serveur de virtualisation détermine le ou les critères d'association à changer afin de modifier soit le critère d'association géographique, soit le critère d'association temporel, soit les deux critères d'association géographique et temporel.

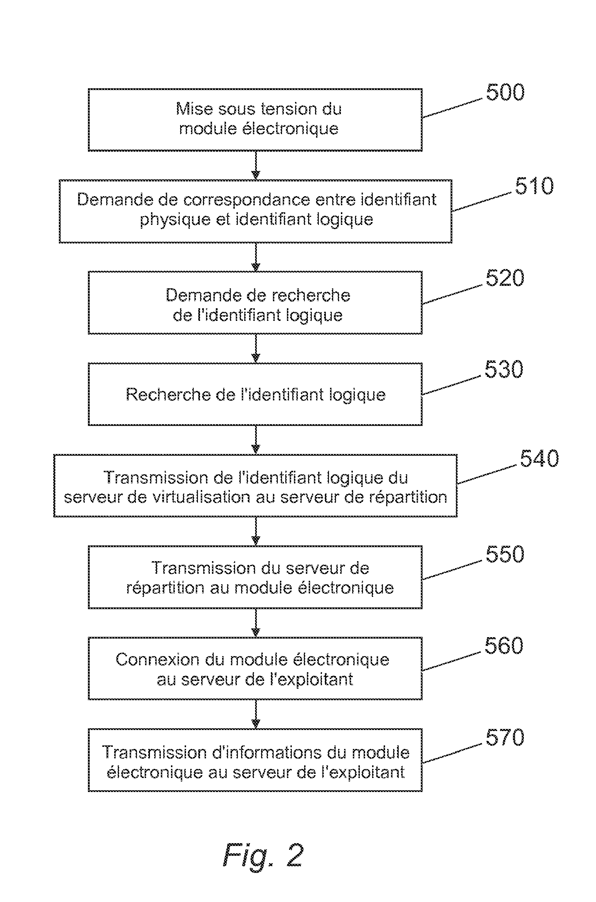

Le fonctionnement du système global de gestion comprend les différentes étapes montrées sur la figure 2. Ces étapes interviennent pour un utilisateur abonné au service de mobilité auprès d'un exploitant spécifique. Nous considérons que l'utilisateur a effectué les différentes démarches nécessaires à la réservation d'un véhicule comme décrit dans la demande de brevet français 0704117.

L'utilisateur doit effectuer le démarrage du véhicule 100 afin que le module électronique 120 se connecte au système d'alimentation électrique du véhicule lors d'une étape 500. Le module électronique 120 peut également être réinitialisé manuellement le cas échéant.

Lors d'une étape 510, le module électronique 120 établit une communication vers le serveur de répartition 220. Grâce à cette mise en relation, le module électronique 120 peut envoyer une requête au serveur 220 afin d'obtenir les critères d'association qui définissent les propriétés de circulation du véhicule 100 comprenant le module électronique considéré 120. Dans la mesure où le module 120 est identifié de manière unique par l'identifiant physique du véhicule 100, le serveur 220 utilise cet identifiant physique afin de rechercher la correspondance avec des critères d'association du véhicule considéré. Afin de déterminer les critères d'association, le serveur 220 doit établir une communication avec le serveur de virtualisation 240. Ainsi, le serveur 220 requiert auprès du serveur 240 la correspondance entre l'identifiant physique du véhicule 100 et un identifiant logique comme indiqué dans l'étape 520.

Afin de déterminer l'identifiant logique, le module de recherche 280 du serveur de virtualisation entre en communication avec l'ensemble des bases de données 300 des exploitants comme indiqué dans l'étape 530. Ainsi le serveur de virtualisation 240 peut rechercher si l'identifiant physique du véhicule apparaît dans l'une des bases de données 320, 340 des différents exploitants.

Lorsque le module de recherche 280 détecte un identifiant logique associé à l'identifiant physique du véhicule concerné, le module de modification automatique 290 transmet au serveur de répartition 220 l'identifiant logique et les critères d'association tel qu'indiqué dans l'une des bases de données 320, 340 de l'un des exploitants 420, 440. Après la transmission de ces informations comme indiqué à l'étape 540, le serveur de répartition 220 transmet à son tour ces informations au module électronique 120 comme indiqué dans l'étape 550. Dès cet instant, le véhicule 100 dispose donc d'un identifiant logique comprenant des critères d'association. Ces critères d'association déterminent les propriétés de circulation du véhicule 100 concernant notamment la zone de circulation et la période de temps associé vis-à-vis d'un exploitant donné. Comme indiqué dans l'étape 560, le module électronique 120 du véhicule établit alors directement une connexion avec le serveur de l'exploitant 320, 340 en charge de la gestion de la zone de circulation du véhicule 100 concerné. Comme indiqué dans l'étape 570, le module 120 peut alors transmettre directement au serveur de l'exploitant 320, 340 les informations concernant la circulation du véhicule 100 concerné.

Lorsque l'étape de recherche 530 ne permet pas au module de recherche 280 de déterminer la correspondance entre l'identifiant physique du véhicule 100 et un éventuel identifiant logique répertorié dans l'une des bases 320, 340 de l'un des exploitants, alors le module de recherche 280 transmet au serveur de répartition 220 l'indication qu'aucun identifiant logique n'est associé à l'identifiant physique du véhicule 100 concerné. Par conséquent, cela signifie que le véhicule physique concerné n'est attribué à aucun exploitant 420, 440 au moment de la requête en provenance du module électronique 120. Ainsi, le serveur de répartition 220 clôt la connexion établie avec le serveur de virtualisation 240. Cette situation se produit lorsque le véhicule est un véhicule neuf ou un véhicule en panne qui nécessite une réparation.

Dans la situation où le véhicule 100 n'a pas d'identifiant logique initial, les critères d'association sont par conséquent inexistants initialement. Comme précédemment décrit, après la requête du module électronique 120 du véhicule, le module de modification automatique 290 permet de créer des critères d'association pour le véhicule 100 concerné. Ainsi, le véhicule 100 dispose d'un identifiant logique et de critères d'associations modifiés par rapport à leurs états initiaux respectifs.
Une autre situation concerne un véhicule 100 donné qui dispose d'un identifiant logique comprenant des critères d'associations pour déterminer des propriétés de circulation particulières. Dans cette situation, le système de gestion établit une requête automatique afin de programmer le module de modification automatique 290. Ainsi, en fonction des accords préalables entre les différents exploitants, le module de modification automatique 290 modifie les identifiants logiques selon un programme de modification établi à l'avance. Ce programme de modification indique par exemple le nombre de véhicules concernés par le changement, les exploitants concernés, le calendrier de changement associé à ces changements. De cette façon, les identifiants logiques et les critères d'association correspondants sont automatiquement modifiés. Ce mode de réalisation ne nécessite pas de requête en provenance du module électronique 120.

Ainsi, le processus de mutualisation permet de modifier les critères d'association de l'identifiant logique pour un ou plusieurs véhicules 100 donnés afin d'adapter l'offre proposée par le service de mobilité aux besoins des utilisateurs. L'opérateur du système de gestion peut changer les critères d'association selon plusieurs possibilités en fonction du mode de réalisation décrit, de manière prévisible ou imprévisible.

Dans un premier exemple de réalisation, l'opérateur peut modifier le critère géographique afin de modifier une première zone de circulation du véhicule concerné vers une deuxième zone de circulation sans modifier le critère temporel. Dans cette situation, le véhicule concerné change de zone de circulation sans limitation spécifique de durée dans le temps. Ainsi, la première zone de circulation peut être une zone industrielle et la deuxième zone de circulation peut être le centre ville d'une municipalité.

Dans un deuxième exemple de réalisation, l'opérateur peut également modifier le critère de nature temporelle afin de modifier la période de temps associée à la circulation du véhicule sans modifier le critère géographique. Dans ce mode de réalisation, cela signifie que différents exploitants sont localisés sur une même zone de circulation. Cette situation peut se produire lorsqu'une zone de circulation inclut à la fois un centre commercial, un aéroport et un quartier d'affaires. Ainsi, dans cette zone de circulation, sur une période de temps d'une semaine, de nombreux utilisateurs peuvent requérir du lundi au dimanche des véhicules auprès d'un premier exploitant pour se rendre à l'aéroport depuis le quartier d'affaires ou pour quitter l'aéroport afin de se rendre au quartier d'affaires ou dans une autre zone par exemple. Dans cette même zone de circulation, de nombreux utilisateurs peuvent également requérir auprès d'un deuxième exploitant des véhicules pour se rendre au centre commercial à la mi-journée du lundi au vendredi et pendant l'après-midi du samedi. Ainsi, la mutualisation se produit au sein d'une même zone en modulant les critères temporels associés aux véhicules. Les critères temporels sont adaptés aux besoins rencontrés au sein de cette zone par les deux exploitants.

Ainsi, le système selon l'invention permet de modifier l'affectation d'un ou plusieurs véhicules dans différents contexte. Le système selon l'invention permet de modifier l'affectation de un ou plusieurs véhicules lorsqu'ils ne sont pas encore affectés à un exploitant spécifique. Le système selon l'invention permet également de modifier l'affectation d'un ou plusieurs véhicules lorsqu'ils sont déjà affectés à un exploitant spécifique. Ainsi, le système, selon l'invention, permet soit d'affecter un ou plusieurs véhicule à un autre exploitant, soit de laisser les véhicules sans affectation spécifique.

Dans un troisième exemple de réalisation, l'opérateur tel que la ville de Paris, peut également modifier à la fois les critères temporels et géographiques. Dans ce mode réalisation, un premier exploitant d'une première zone et un deuxième exploitant d'une deuxième zone sont amenés à mutualiser leurs flottes de véhicules afin d'équilibrer les besoins des utilisateurs et l'offre de véhicules au sein des deux zones de circulation concernées. Ainsi, sur une période de temps d'une semaine, le premier exploitant dispose d'un certain nombre de véhicules du lundi au vendredi. Parmi ces véhicules se trouvent des véhicules initialement affectés au deuxième exploitant. Sur la même période de temps d'une semaine, le deuxième exploitant dispose d'un certain nombre de véhicules du samedi au dimanche. Parmi ces véhicules se trouvent des véhicules initialement affectés au premier exploitant.

Le système selon l'invention optimise la rentabilité des services relatifs à la gestion des flottes de véhicules 100. En effet, le changement d'affectation de zone d'un véhicule 100 permet d'affecter différents types de service à un même véhicule 100, sans avoir à intervenir physiquement sur le véhicule 100.

Le changement d'affectation est réalisable à distance au moyen de dispositifs électroniques tels que des assistants personnels électroniques ou encore par connexion directe à un ordinateur ou à un serveur vocal.

Le changement d'affectation peut consister en une transaction dans laquelle les deux opérateurs 420, 440 certifieraient l'acceptation du changement de zones du premier vers le deuxième exploitant par exemple. Cette mise à jour peut ensuite être envoyée au sein des bases de données relatives au véhicule 100.

A la fin du processus de changement d'affectation, l'exploitant en charge d'accueillir le véhicule 100 au sein de la nouvelle zone peut également confirmer l'acceptation du véhicule 100 en temps réel.

Les modes de réalisation précédemment décrits sont indiqués à titre d'exemple uniquement.

## Revendications

1. Procédé de gestion d'un ensemble de véhicules (100) associé à un opérateur ou plusieurs opérateurs, lesdits véhicules (100) étant attribuables à un ou plusieurs exploitants, chaque véhicule (100) étant identifié au moyen d'un identifiant numérique au sein d'un système électronique de gestion, chaque identifiant numérique étant pourvu d'au moins un critère d'association afin de définir les propriétés de circulation initiales du véhicule ledit procédé étant **caractérisé en ce qu'**il comprend les étapes suivantes :
- réception d'une demande de modification d'au moins un des critères d'association d'un véhicule (100) ;
- détermination de la nature du critère d'association à modifier ;
- modification automatique du critère de l'identifiant numérique en fonction de la détermination de la nature du critère afin de générer des propriétés de circulation modifiées du véhicule (100).

2. Procédé selon la revendication 1, **caractérisé en ce qu'**il comprend une étape de modification automatique du critère de l'identifiant afin de d'obtenir les propriétés de circulation initiales du véhicule (100).

3. Procédé selon la revendication 1 ou 2, **caractérisé en ce que** l'étape de détermination de la nature du critère d'association à modifier comprend l'obtention d'un critère géographique.

4. Procédé selon la revendication 3, **caractérisé en ce que** l'étape de modification automatique comprend la modification du critère géographique de l'identifiant numérique afin de déterminer une zone de circulation.

5. Procédé selon la revendication 1 ou 2, **caractérisé en ce que** l'étape de détermination de la nature du critère d'association à modifier comprend l'obtention d'un critère temporel.

6. Procédé selon la revendication 5, **caractérisé en ce que** l'étape de modification automatique comprend la modification du critère temporel de l'identifiant numérique afin de déterminer une deuxième période de temps.

7. Procédé selon les revendications 1 ou 2, **caractérisé en ce que** l'étape de détermination de la nature du critère d'association à modifier comprend l'obtention d'un critère énergétique associant au véhicule les lieux de rechargement libre et à proximité de la zone.

8. Procédé selon la revendication 7, **caractérisé en ce que** l'étape de modification automatique comprend la modification du critère géographique du lieu de recharge.

9. Procédé selon l'une des revendications 1 à 8, dans lequel les véhicules sont des véhicules à faible autonomie.

10. Système de gestion d'une flotte de véhicules (100) associée à un premier opérateur sur une première zone de circulation, chaque véhicule (100) étant identifié au moyen d'un identifiant numérique au sein d'un système électronique de gestion, chaque identifiant numérique étant associé à un critère géographique afin de déterminer la première zone de circulation de chaque véhicule (100) associé à l'identifiant numérique et à un critère temporel afin de déterminer la première période de temps associée à l'identifiant numérique ledit système étant **caractérisé en ce qu'**il comprend :
- un module de réception (220) pour recevoir une demande de modification d'au moins un des critères d'association d'un véhicule associé au premier opérateur et à la première zone de circulation ;
- un module d'analyse (240) pour déterminer la nature du critère d'association à modifier ;
- un module de modification (290) pour modifier automatiquement le critère de l'identifiant numérique en fonction de la détermination de la nature du critère.

11. Système selon la revendication 7, **caractérisée en ce que** le module d'analyse produit l'obtention d'un critère géographique.

12. Système selon la revendication 8, **caractérisé en ce que** le module de modification (290) produit la modification du critère géographique de l'identifiant numérique afin de déterminer une deuxième zone de circulation.

13. Système selon la revendication 7, **caractérisé en ce que** le module d'analyse (240) produit l'obtention d'un critère temporel.

14. Système selon la revendication 10, **caractérisé en ce que** le module de modification (290) produit la modification du critère géographique de l'identifiant numérique afin de déterminer une deuxième période de temps.
